# EUROPEAN PATENT APPLICATION

(11) **EP 4 733 105 A1**
(43) Date of publication of application: **29.04.2026**
(21) Application number: 25206077.7
(22) Date of filing: 01.10.2025
(51) Int. Cl.: B60K 6/36, B60K 6/365, B60K 6/387, B60K 6/40, B60K 6/547, F16H 3/093, F16H 3/097

(54) **HYBRID MOTOR DISCONNECT**

(30) Priority: 24.10.2024 US 202463711338 P; 07.08.2025 US 202519292982
(71) Applicant: Eaton Cummins Automated Transmission Technologies, LLC, Galesburg, MI 49053 (US)
(72) Inventor: Wilson, Paul, Galesburg, 49053 (US); Jackson, Graeme Andrew, Galesburg, 49053 (US); Kawale, Sujay, Galesburg, 49053 (US)
(74) Representative: Schaumburg und Partner Patentanwälte mbB

(57) **Abstract**

A hybrid automated manual transmission includes an input shaft configured to be connected to a prime mover by an input clutch. At least one splitter gear is connectable to the input shaft. A main shaft is coaxial with the input shaft. At least two main shaft gears are connectable to the main shaft. At least one countershaft has at least one first driven gear drivingly engaged with the at least one splitter gear and at least two second driven gears drivingly engaged with the at least two main shaft gears. A motor generator drivingly connected to the input shaft by a reduced gear ratio and a motor generator clutch.

## Description

### CROSS-REFERENCE TO RELATED APPLICATIONS

This application claims the benefit of U.S. Provisional Application No. 63/711,338, filed October 24, 2024. The entire disclosure of the above application is incorporated herein by reference.

### FIELD

The present disclosure relates to a hybrid motor disconnect as shown in the attached drawing figures which schematically depict various alternative hybrid transmissions with a motor disconnect.

### BACKGROUND

This section provides background information related to the present disclosure which is not necessarily prior art.

Hybrid and mild hybrid vehicle drivetrains are becoming common in the cargo truck industry to provide ancillary power, regeneration/recovery, and boost. Existing solutions are offered but lack the ability to provide features when the engine is off. Accordingly, it is desirable to provide a hybrid transmission with an ability to provide selected operations when the engine is off.

### SUMMARY

This section provides a general summary of the disclosure, and is not a comprehensive disclosure of its full scope or all of its features.

Several hybrid automated transmission gearing and mounting architectures are disclosed to provide selective motor generator (MG) connections to optimize possible speed ratios between vehicle and MG. Vehicle packaging is a specific consideration for the various options as well as preserving PTO and retarder capability.

According to an aspect of the present disclosure, a hybrid automated manual transmission includes an input shaft configured to be connected to a prime mover by an input clutch. At least one splitter gear connectable to the input shaft. A main shaft coaxial with the input shaft. At least two main shaft gears connectable to the main shaft. At least one countershaft having at least one first driven gear drivingly engaged with the at least one splitter gear and at least two second driven gears drivingly engaged with the at least two main shaft gears. A motor generator is drivingly connected to the input shaft by a reduced gear ratio and a motor generator clutch.

According to a further aspect, the motor generator is drivingly connected to the input shaft by an input shaft gear mounted to the input shaft.

According to a further aspect, the input shaft gear is rotatably connectable and disconnectable to the input shaft by the motor generator clutch.

According to a further aspect, the motor generator includes a drive shaft and a drive gear that are engaged with the input shaft gear.

According to a further aspect, a range gear system is drivingly connected to the main shaft.

According to a further aspect, the motor generator is at a rear of the main shaft.

According to a further aspect, a retarder drivingly engaged with an output shaft of the range gear system.

According to a further aspect, the motor generator is concentric with the input shaft.

According to a further aspect, the motor generator is drivingly connected to the input shaft by a planetary gear system.

According to an aspect of the present disclosure, a hybrid automated manual transmission includes an input shaft configured to be connected to a prime mover by an input clutch. At least one splitter gear is connectable to the input shaft. A main shaft is coaxial with the input shaft. At least two main shaft gears are connectable to the main shaft. At least one countershaft includes at least one first driven gear drivingly engaged with the at least one splitter gear and at least two second driven gears drivingly engaged with the at least two main shaft gears. A motor generator is drivingly connected to the input shaft by an input shaft gear mounted to the input shaft to provide drive torque to the input shaft through a motor generator clutch that is connectable and disconnectable to the input shaft.

According to a further aspect, the motor generator includes a drive shaft and a drive gear that are drivingly engaged with the gear mounted to the input shaft.

According to a further aspect, a range gear system is drivingly connected to the main shaft.

According to a further aspect, the motor generator is at a rear of the main shaft.

According to a further aspect, a retarder drivingly engaged with an output shaft of the range gear system.

According to another aspect, a hybrid automated manual transmission includes an input shaft configured to be connected to a prime mover by an input clutch. At least one splitter gear is connectable to the input shaft. A main shaft is coaxial with the input shaft. At least two main shaft gears are connectable to the main shaft. At least one countershaft having at least one first driven gear drivingly engaged with the at least one splitter gear and at least two second driven gears drivingly engaged with the at least two main shaft gears. A motor generator drivingly connected to the countershaft through a motor generator clutch.

According to a further aspect, the motor generator is drivingly connected to the countershaft by an input shaft gear drivingly connected to the input shaft by the motor generator clutch.

According to a further aspect, the motor generator is connected to a first shaft that includes a first drive gear that is drivingly connected to a second shaft by a first driven gear and the second shaft includes a second drive gear that is drivingly connected to the input shaft gear.

### BRIEF DESCRIPTION OF THE DRAWINGS

The drawings described herein are for illustrative purposes only of selected embodiments and not all possible implementations, and are not intended to limit the scope of the present disclosure.
FIG. 1 is a schematic view of a hybrid automated manual transmission with a motor disconnect;
FIG. 2 is a schematic view of a hybrid automated manual transmission with a 3X3X2 architecture and a motor disconnect;
FIG. 3 is a schematic view of a hybrid automated manual transmission with a motor disconnect;
FIG. 4 is a schematic view of a hybrid automated manual transmission with dual drive gear and a motor disconnect;
FIG. 5 is a schematic view of a hybrid automated manual transmission with a 3X3X2 architecture, a PTO system and a motor disconnect; and
FIG. 6 is a schematic view of a hybrid automated manual transmission with a dual drive gear, a 3X3X2 architecture, a PTO system and a motor disconnect.

Corresponding reference numerals indicate corresponding parts throughout the several views of the drawings.

### DETAILED DESCRIPTION

Example embodiments will now be described more fully with reference to the accompanying drawings.

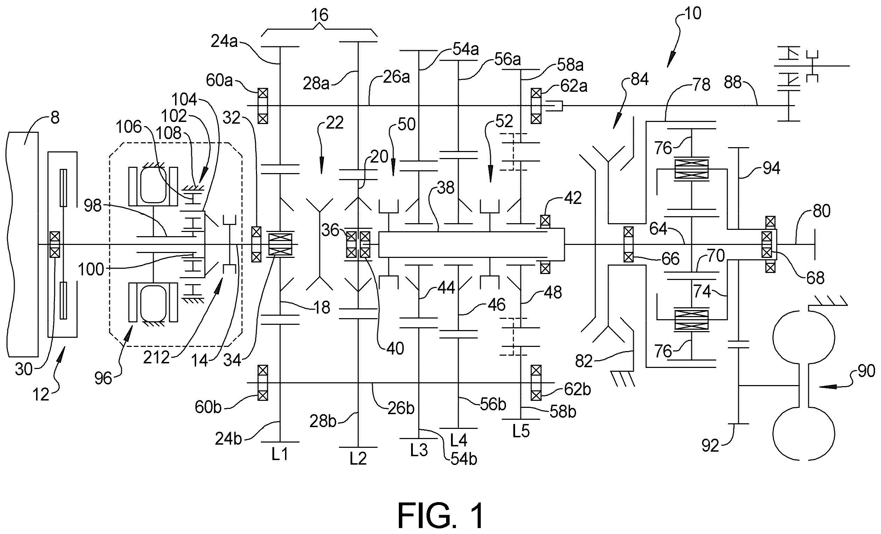

With reference to FIG. 1, a hybrid automated manual transmission 10 includes an input clutch 12 that provides a driving connection from a prime mover (engine) 8 to an input shaft 14. A splitter section 16 includes a first splitter gear 18 and a second splitter gear 20 that are drivingly connectable to the input shaft 14 by a first clutch 22. The first splitter gear 18 is engaged with a pair of first driven gears 24a, 24b provided on a pair of countershafts 26a, 26b. The second splitter gear 20 is engaged with a pair of second driven gears 28a, 28b provided on the pair of countershafts 26a, 26b. The input shaft 14 is supported by a front input shaft bearing 30, a first and a second intermediate input shaft bearings 32, 34 and a rear input shaft bearing 36.

A main shaft 38 is concentric with the input shaft 14 and is supported by a forward main shaft bearing 40 and a rear main shaft bearing 42. The main shaft 38 supports a first main shaft gear 44, a second main shaft gear 46 and a third main shaft gear 48. A first main shaft clutch 50 is engageable with the second splitter gear 20 and the first main shaft gear 44. A second main shaft clutch 52 is engageable with the second main shaft gear 46 and the third main shaft gear 48. The first main shaft gear 44 is in driving engagement with a pair of third driven gears 54a, 54b on the pair of countershafts 28a, 28b. The second main shaft gear 46 is in driving engagement with a pair of third driven gears 56a, 56b on the pair of countershafts 28a, 28b. The third main shaft gear 48 is in driving engagement with a pair of third driven gears 58a, 58b on the pair of countershafts 28a, 28b.

The pair of countershafts 28a, 28b are each supported by a forward countershaft bearing 60a, 60b and a rearward countershaft bearing 62a, 62b.

A range gear shaft 64 is in a splined connection with and coaxial with the main shaft 38. The range gear shaft 64 is supported by the rear main shaft bearing 42, an intermediate range gear shaft bearing 66 and a rear range gear shaft bearing 68. The range gear shaft is connected to a sun gear 70 of a range gear system 72. A range gear system 72 include a planetary carrier 74 that supports a plurality of planetary pinions 76 that are in meshing engagement with the sun gear 70 and a ring gear 78. The planetary carrier 74 is connected to an output shaft 80. The ring gear 78 can be connected to the range gear shaft 64 or alternatively to a fixed portion 82 by a range gear clutch 84 for shifting between a high and a low speed gear.

A first PTO interface 86 is provided with one of the countershaft gears and particularly with the second driven gear 28b of the countershaft 26b. A second PTO interface including PTO shaft 88 is provided for connection with an end of the countershaft 26a.

A retarder 90 is in driving engagement with a gear 92 in meshing engagement with a retarder gear 94 provided on the output shaft 80.

A motor generator 96 is mounted concentric with the input shaft 14 and includes an output shaft 98 that is connected to a sun gear 100 of a planetary gear system 102. A planetary carrier 104 is connectable and disconnectable to the input shaft 14 by a motor generator clutch 212. The planetary gear system 102 includes a plurality of planetary gears 106 that are supported by the planetary carrier 104 and are in meshing engagement with the sun gear 100 and a fixed ring gear 108. The motor generator 96 and planetary gear system 102 provides driving input to the input shaft 14. The motor generator 96 is drivingly connected to the input shaft 14 by a reduced gear ratio via the planetary gear system 102.

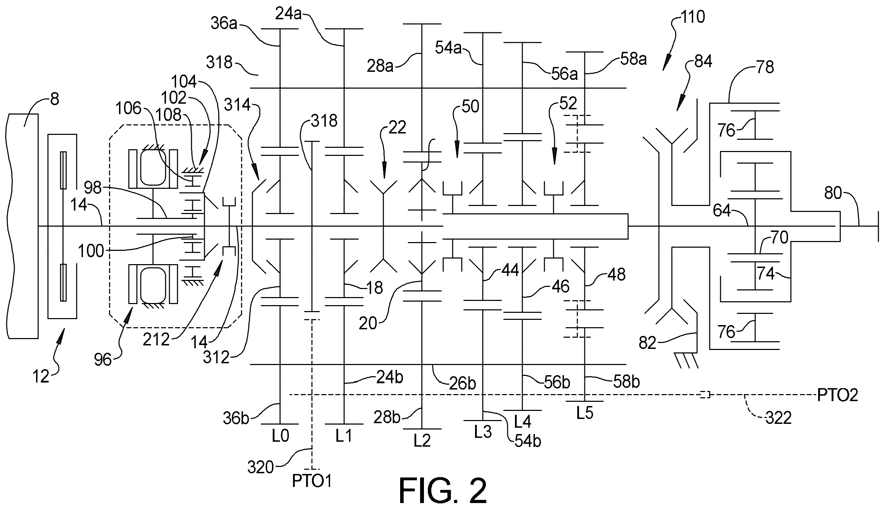

With reference to FIG. 2, a 3x3x2 architecture hybrid automated manual transmission 110 includes an input clutch 12 that provides a driving connection from a prime mover (engine) 8 to an input shaft 14. A splitter section 16 includes a first splitter gear 18, a second splitter gear 20 and a third splitter gear 312 that are drivingly connectable to the input shaft 14 by a first clutch 22 and a second clutch 314. The first splitter gear 18 is engaged with a pair of first driven gears 24a, 24b provided on a pair of countershafts 26a, 26b. The second splitter gear 20 is engaged with a pair of second driven gears 28a, 28b provided on the pair of countershafts 26a, 26b. The third splitter gear 312 is engaged with a pair of third driven gears 316a, 316b provided on the pair of countershafts 26a, 26b. The input shaft 14 can be supported by a front input shaft bearing, a first and a second intermediate input shaft bearings and a rear input shaft bearing.

A main shaft 38 is concentric with the input shaft 14 and can be supported by a forward main shaft bearing and a rear main shaft bearing. The main shaft 38 supports a first main shaft gear 44, a second main shaft gear 46 and a third main shaft gear 48. A first main shaft clutch 50 is engageable with the second splitter gear 20 and the first main shaft gear 44. A second main shaft clutch 52 is engageable with the second main shaft gear 46 and the third main shaft gear 48. The first main shaft gear 44 is in driving engagement with a pair of third driven gears 54a, 54b on the pair of countershafts 28a, 28b. The second main shaft gear 46 is in driving engagement with a pair of third driven gears 56a, 56b on the pair of countershafts 28a, 28b. The third main shaft gear 48 is in driving engagement with a pair of third driven gears 58a, 58b on the pair of countershafts 28a, 28b.

The pair of countershafts 28a, 28b can each be supported by a forward countershaft bearing and a rearward countershaft bearing.

A range gear shaft 64 is in a splined connection with and coaxial with the main shaft 38. The range gear shaft 64 can be supported by the rear main shaft bearing, an intermediate range gear shaft bearing and a rear range gear shaft bearing. The range gear shaft is connected to a sun gear 70 of a range gear system 72. A range gear system 72 include a planetary carrier 74 that supports a plurality of planetary pinions 76 that are in meshing engagement with the sun gear 70 and a ring gear 78. The planetary carrier 74 is connected to an output shaft 80. The ring gear 78 can be connected to the range gear shaft 64 or alternatively to a fixed portion 82 by a range gear clutch 84 for shifting between a high and a low speed gear.

A PTO interface is provided with a PTO drive gear 318 mounted to the input shaft 14 and a driven gear 320 connected to a PTO shaft 322.

A motor generator 96 is mounted concentric with the input shaft 14 and includes an output shaft 98 that is connected to a sun gear 100 of a planetary gear system 102. A planetary carrier 104 is connectable and disconnectable to the input shaft 14 by a motor generator clutch 212. The planetary gear system 102 includes a plurality of planetary gears 106 that are supported by the planetary carrier 104 and are in meshing engagement with the sun gear 100 and a fixed ring gear 108. The motor generator 96 and planetary gear system 102 provides driving input to the input shaft 14. The motor generator 96 is drivingly connected to the input shaft 14 by a reduced gear ratio via the planetary gear system 102.

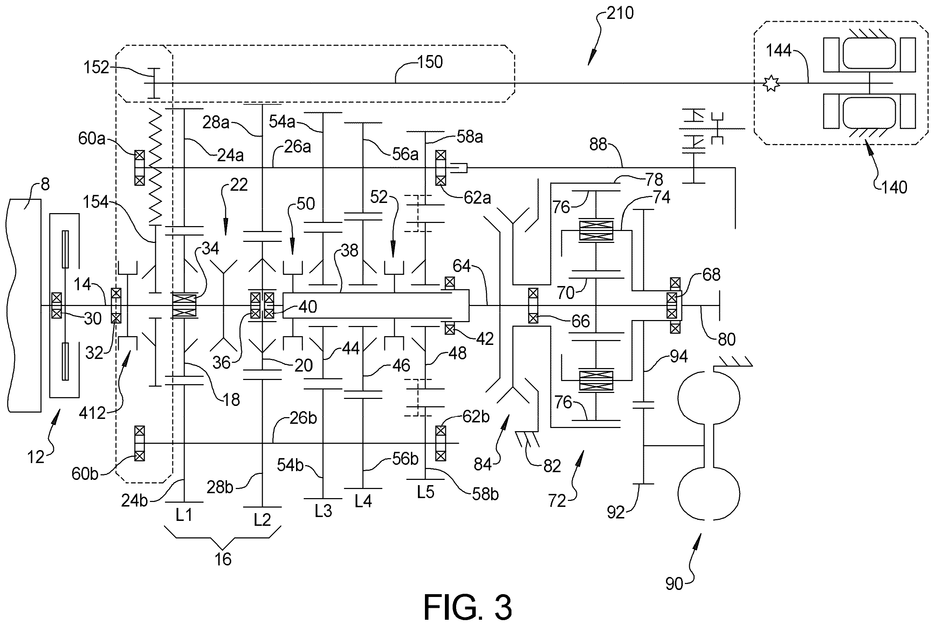

With reference to FIG. 3, a hybrid automated manual transmission 210 according to the principles of the present disclosure will now be described. The hybrid automated manual transmission 210 includes an input clutch 12 that provides a driving connection from a prime mover (engine) 8 to an input shaft 14. A splitter section 16 includes a first splitter gear 18 and a second splitter gear 20 that are drivingly connectable to the input shaft 14 by a first clutch 22. The first splitter gear 18 is engaged with a pair of first driven gears 24a, 24b provided on a pair of countershafts 26a, 26b. The second splitter gear 20 is engaged with a pair of second driven gears 28a, 28b provided on the pair of countershafts 26a, 26b. The input shaft 14 is supported by a front input shaft bearing 30, a first and a second intermediate input shaft bearings 32, 34 and a rear input shaft bearing 36.

A main shaft 38 is concentric with the input shaft 14 and is supported by a forward main shaft bearing 40 and a rear main shaft bearing 42. The main shaft 38 supports a first main shaft gear 44, a second main shaft gear 46 and a third main shaft gear 48. A first main shaft clutch 50 is engageable with the second splitter gear 20 and the first main shaft gear 44. A second main shaft clutch 52 is engageable with the second main shaft gear 46 and the third main shaft gear 48. The first main shaft gear 44 is in driving engagement with a pair of third driven gears 54a, 54b on the pair of countershafts 28a, 28b. The second main shaft gear 46 is in driving engagement with a pair of third driven gears 56a, 56b on the pair of countershafts 28a, 28b. The third main shaft gear 48 is in driving engagement with a pair of third driven gears 58a, 58b on the pair of countershafts 28a, 28b.

The pair of countershafts 28a, 28b are each supported by a forward countershaft bearing 60a, 60b and a rearward countershaft bearing 62a, 62b.

A range gear shaft 64 is in a splined connection with and coaxial with the main shaft 38. The range gear shaft 64 is supported by the rear main shaft bearing 42, an intermediate range gear shaft bearing 66 and a rear range gear shaft bearing 68. The range gear shaft is connected to a sun gear 70 of a range gear system 72. The range gear system 72 includes a planetary carrier 74 that supports a plurality of planetary pinions 76 that are in meshing engagement with the sun gear 70 and a ring gear 78. The planetary carrier 74 is connected to an output shaft 80. The ring gear 78 can be connected to the range gear shaft 64 or alternatively to a fixed portion 82 by a range gear clutch 84 for shifting between a high and a low speed gear.

A PTO interface includes a PTO shaft 88 that is provided for connection with an end of the countershaft 26a and is engageable at a rear end of the transmission 210.

A retarder 90 is in driving engagement with a gear 92 in meshing engagement with a retarder gear 94 provided on the output shaft 80.

A motor generator 140 is mounted at a rear end of the transmission 210 and is drivingly connected to the input shaft 14. The motor generator 140 includes an output shaft 144 that includes a drive gear 152 that is in meshing engagement with a gear 154 that is connectable and disconnectable to the input shaft 14 by a motor generator clutch 412. The motor generator 140 and shaft 150 provide selective driving input to the input shaft 14 via the motor generator clutch 412.

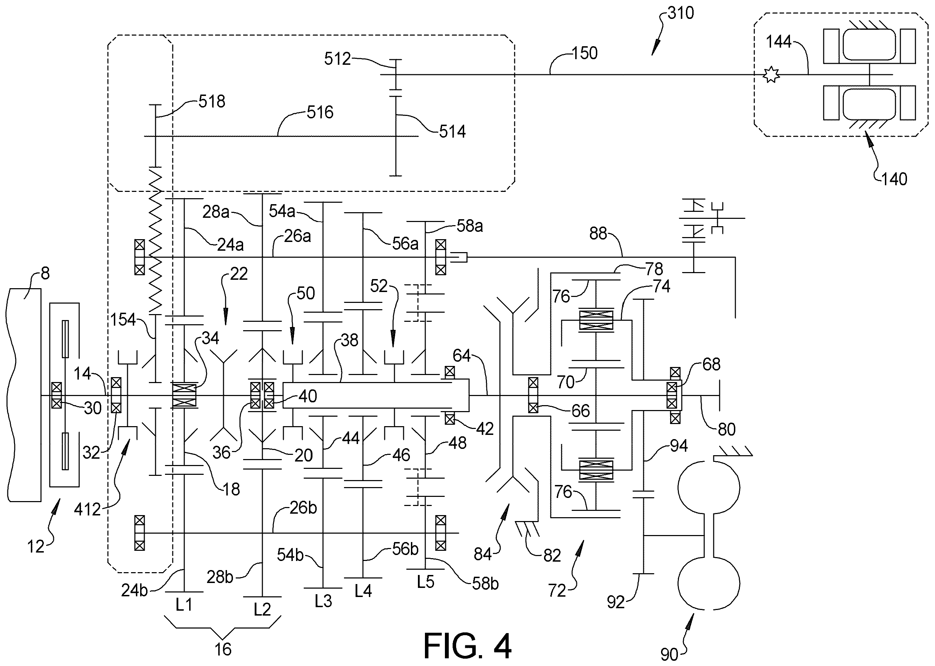

With reference to FIG. 4, a hybrid automated manual transmission 310 according to the principles of the present disclosure will now be described. The hybrid automated manual transmission 310 includes an input clutch 12 that provides a driving connection from a prime mover (engine) 8 to an input shaft 14. A splitter section 16 includes a first splitter gear 18 and a second splitter gear 20 that are drivingly connectable to the input shaft 14 by a first clutch 22. The first splitter gear 18 is engaged with a pair of first driven gears 24a, 24b provided on a pair of countershafts 26a, 26b. The second splitter gear 20 is engaged with a pair of second driven gears 28a, 28b provided on the pair of countershafts 26a, 26b. The input shaft 14 is supported by a front input shaft bearing 30, a first and a second intermediate input shaft bearings 32, 34 and a rear input shaft bearing 36.

A main shaft 38 is concentric with the input shaft 14 and is supported by a forward main shaft bearing 40 and a rear main shaft bearing 42. The main shaft 38 supports a first main shaft gear 44, a second main shaft gear 46 and a third main shaft gear 48. A first main shaft clutch 50 is engageable with the second splitter gear 20 and the first main shaft gear 44. A second main shaft clutch 52 is engageable with the second main shaft gear 46 and the third main shaft gear 48. The first main shaft gear 44 is in driving engagement with a pair of third driven gears 54a, 54b on the pair of countershafts 28a, 28b. The second main shaft gear 46 is in driving engagement with a pair of third driven gears 56a, 56b on the pair of countershafts 28a, 28b. The third main shaft gear 48 is in driving engagement with a pair of third driven gears 58a, 58b on the pair of countershafts 28a, 28b.

The pair of countershafts 28a, 28b are each supported by a forward countershaft bearing 60a, 60b and a rearward countershaft bearing 62a, 62b.

A range gear shaft 64 is in a splined connection with and coaxial with the main shaft 38. The range gear shaft 64 is supported by the rear main shaft bearing 42, an intermediate range gear shaft bearing 66 and a rear range gear shaft bearing 68. The range gear shaft is connected to a sun gear 70 of a range gear system 72. The range gear system 72 includes a planetary carrier 74 that supports a plurality of planetary pinions 76 that are in meshing engagement with the sun gear 70 and a ring gear 78. The planetary carrier 74 is connected to an output shaft 80. The ring gear 78 can be connected to the range gear shaft 64 or alternatively to a fixed portion 82 by a range gear clutch 84 for shifting between a high and a low speed gear.

A PTO interface includes a PTO shaft 88 that is provided for connection with an end of the countershaft 26a.

A retarder 90 is in driving engagement with a gear 92 in meshing engagement with a retarder gear 94 provided on the output shaft 80.

A motor generator 140 is mounted at a rear end of the transmission 310 and is drivingly connected to the input shaft 14. The motor generator 140 includes an output shaft 144 that connects to a drive shaft 150 and first drive gear 512 that provide drive torque with a reduced gear ratio to a first driven gear 514 of a second shaft 516. A second drive gear 518 is mounted to the second shaft 516, The second drive gear 516 is in meshing engagement with a gear 154 with a reduced gear ratio that is connectable to the input shaft 14 by a motor generator clutch 412. The motor generator 140 and shafts 150, 516 provide driving input to the input shaft 14 via the motor generator clutch 412.

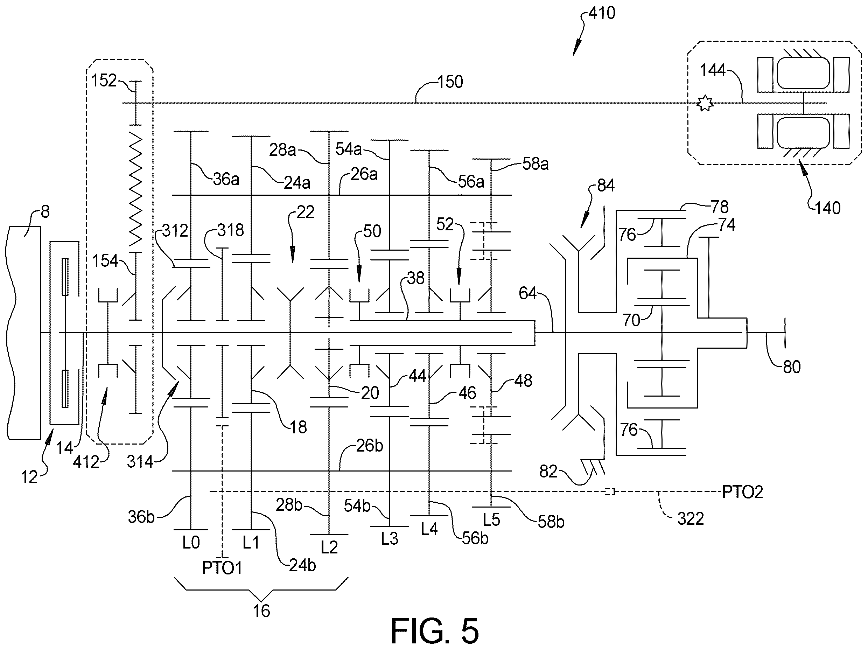

With reference to FIG. 5, a 3x3x2 architecture hybrid automated manual transmission 410 according to the principles of the present disclosure will now be described. The transmission includes an input clutch 12 that provides a driving connection from a prime mover (engine) 8 to an input shaft 14. A splitter section 16 includes a first splitter gear 18, a second splitter gear 20 and a third splitter gear 312 that are drivingly connectable to the input shaft 14 by a first clutch 22 and a second clutch 314. The first splitter gear 18 is engaged with a pair of first driven gears 24a, 24b provided on a pair of countershafts 26a, 26b. The second splitter gear 20 is engaged with a pair of second driven gears 28a, 28b provided on the pair of countershafts. The third splitter gear 312 is engaged with a pair of third driven gears 316a, 316b provided on the pair of countershafts. The input shaft 14 can be supported by a front input shaft bearing, a first and a second intermediate input shaft bearings and a rear input shaft bearing.

A main shaft 38 is concentric with the input shaft 14 and is supported by a forward main shaft bearing 40 and a rear main shaft bearing 42. The main shaft 38 supports a first main shaft gear 44, a second main shaft gear 46 and a third main shaft gear 48. A first main shaft clutch 50 is engageable with the second splitter gear 20 and the first main shaft gear 44. A second main shaft clutch 52 is engageable with the second main shaft gear 46 and the third main shaft gear 48. The first main shaft gear 44 is in driving engagement with a pair of third driven gears 54a, 54b on the pair of countershafts 28a, 28b. The second main shaft gear 46 is in driving engagement with a pair of third driven gears 56a, 56b on the pair of countershafts 28a, 28b. The third main shaft gear 48 is in driving engagement with a pair of third driven gears 58a, 58b on the pair of countershafts 28a, 28b.

The pair of countershafts 28a, 28b are each supported by a forward countershaft bearing and a rearward countershaft bearing.

A range gear shaft 64 is in a splined connection with and coaxial with the main shaft 38. The range gear shaft 64 is supported by the rear main shaft bearing, an intermediate range gear shaft bearing and a rear range gear shaft bearing. The range gear shaft is connected to a sun gear 70 of a range gear system 72. The range gear system 72 includes a planetary carrier 74 that supports a plurality of planetary pinions 76 that are in meshing engagement with the sun gear 70 and a ring gear 78. The planetary carrier 74 is connected to an output shaft 80. The ring gear 78 can be connected to the range gear shaft 64 or alternatively to a fixed portion 82 by a range gear clutch 84 for shifting between a high and a low speed gear.

A PTO interface includes a PTO shaft 88 that is provided for connection with an end of the countershaft 26a.

A retarder 90 is in driving engagement with a gear 92 in meshing engagement with a retarder gear 94 provided on the output shaft 80.

A motor generator 140 is mounted at a rear end of the transmission 410 and is drivingly connected to the input shaft 14. The motor generator 140 includes an output shaft 144 that includes a drive gear 152 that is in meshing engagement with a gear 154 that is connectable to the input shaft 14 by a motor generator clutch 412. The motor generator 140 and shaft 150 provide driving input to the input shaft 14 via the motor generator clutch 412.

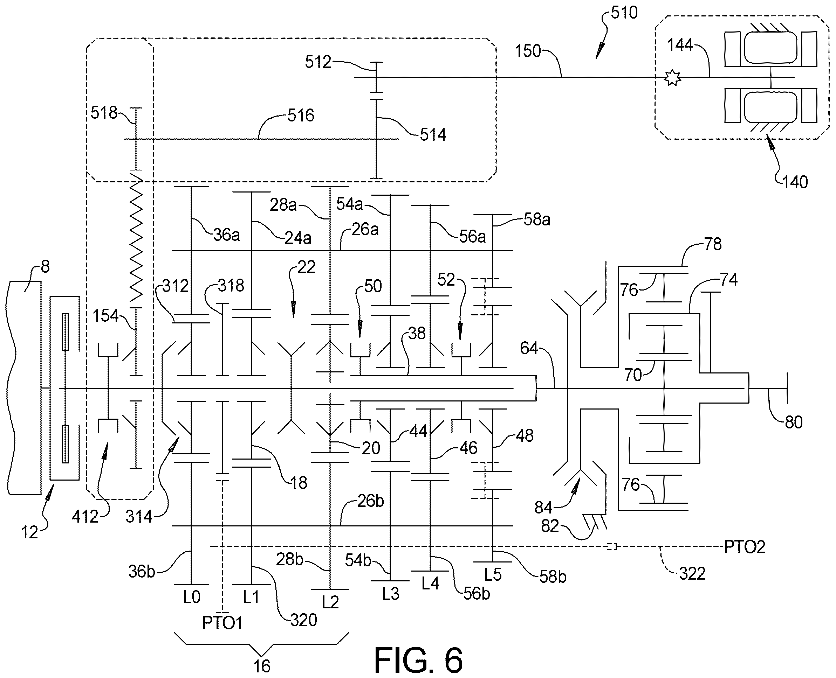

With reference to FIG. 6, a 3x3x2 architecture hybrid automated manual transmission 510 according to the principles of the present disclosure will now be described. The transmission includes an input clutch 12 that provides a driving connection from a prime mover (not shown) to an input shaft 14. A splitter section 16 includes a first splitter gear 18, a second splitter gear 20 and a third splitter gear 312 that are drivingly connectable to the input shaft 14 by a first clutch 22 and a second clutch 314. The first splitter gear 18 is engaged with a pair of first driven gears 24a, 24b provided on a pair of countershafts 26a, 26b. The second splitter gear 20 is engaged with a pair of second driven gears 28a, 28b provided on the pair of countershafts. The third splitter gear 312 is engaged with a pair of third driven gears 316a, 316b provided on the pair of countershafts. The input shaft 14 can be supported by a front input shaft bearing, a first and a second intermediate input shaft bearings and a rear input shaft bearing.

A main shaft 38 is concentric with the input shaft 14 and is supported by a forward main shaft bearing 40 and a rear main shaft bearing 42. The main shaft 38 supports a first main shaft gear 44, a second main shaft gear 46 and a third main shaft gear 48. A first main shaft clutch 50 is engageable with the second splitter gear 20 and the first main shaft gear 44. A second main shaft clutch 52 is engageable with the second main shaft gear 46 and the third main shaft gear 48. The first main shaft gear 44 is in driving engagement with a pair of third driven gears 54a, 54b on the pair of countershafts 28a, 28b. The second main shaft gear 46 is in driving engagement with a pair of third driven gears 56a, 56b on the pair of countershafts 28a, 28b. The third main shaft gear 48 is in driving engagement with a pair of third driven gears 58a, 58b on the pair of countershafts 28a, 28b.

The pair of countershafts 28a, 28b are each supported by a forward countershaft bearing and a rearward countershaft bearing.

A range gear shaft 64 is in a splined connection with and coaxial with the main shaft 38. The range gear shaft 64 is supported by the rear main shaft bearing, an intermediate range gear shaft bearing and a rear range gear shaft bearing. The range gear shaft is connected to a sun gear 70 of a range gear system 72. The range gear system 72 includes a planetary carrier 74 that supports a plurality of planetary pinions 76 that are in meshing engagement with the sun gear 70 and a ring gear 78. The planetary carrier 74 is connected to an output shaft 80. The ring gear 78 can be connected to the range gear shaft 64 or alternatively to a fixed portion 82 by a range gear clutch 84 for shifting between a high and a low speed gear.

A PTO interface includes a PTO shaft 88 that is provided for connection with an end of the countershaft 26a.

A retarder 90 is in driving engagement with a gear 92 in meshing engagement with a retarder gear 94 provided on the output shaft 80.

A motor generator 140 is mounted at a rear end of the transmission 510 and is drivingly connected to the input shaft 14. The motor generator 140 includes an output shaft 144 that connects to a drive shaft 150 and first drive gear 512 that provide drive torque to a first driven gear 514 of a second shaft 516. A second drive gear 518 is mounted to the second shaft 516. The second drive gear 516 is in meshing engagement with a gear 154 that is selectively connectable and disconnectable to the input shaft 14 by a motor generator clutch 412. The motor generator 140 and shafts 150, 516 provide driving input to the input shaft 14 via the motor generator clutch 412.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A hybrid automated manual transmission, comprising:
an input shaft configured to be connected to a prime mover by an input clutch;
at least one splitter gear connectable to the input shaft;
a main shaft coaxial with the input shaft;
at least two main shaft gears connectable to the main shaft;
at least one countershaft having at least one first driven gear drivingly engaged with the at least one splitter gear and at least two second driven gears drivingly engaged with the at least two main shaft gears; and
a motor generator drivingly connected to the input shaft by a reduced gear ratio and a motor generator clutch.

2. The hybrid automated manual transmission according to claim 1, wherein the motor generator is drivingly connected to the input shaft by an input shaft gear mounted to the input shaft.

3. The hybrid automated manual transmission according to claim 2, wherein the input shaft gear is rotatably connectable and disconnectable to the input shaft by the motor generator clutch.

4. The hybrid automated manual transmission according to claim 2, wherein the motor generator includes a drive shaft and a drive gear that are engaged with the input shaft gear.

5. The hybrid automated manual transmission according to claim 1, further comprising a range gear system drivingly connected to the main shaft.

6. The hybrid automated manual transmission according to claim 1, wherein the motor generator is at a rear of the main shaft.

7. The hybrid automated manual transmission according to claim 1, wherein the motor generator is concentric with the input shaft.

8. The hybrid automated manual transmission according to claim 7, wherein the motor generator is drivingly connected to the input shaft by a planetary gear system.

9. The hybrid automated manual transmission according to claim 8, wherein the motor generator clutch connected to a planetary carrier of the planetary gear system.

10. A hybrid automated manual transmission, comprising:
an input shaft configured to be connected to a prime mover by an input clutch;
at least one splitter gear connectable to the input shaft;
a main shaft coaxial with the input shaft;
at least two main shaft gears connectable to the main shaft;
at least one countershaft having at least one first driven gears drivingly engaged with the at least one splitter gear and at least two second driven gears drivingly engaged with the at least two main shaft gears; and
a motor generator drivingly connected to the input shaft by an input shaft gear mounted to the input shaft to providing drive torque to the input shaft through a motor generator clutch that is connectable and disconnectable to the input shaft.

11. The hybrid automated manual transmission according to claim 10, wherein the motor generator includes a drive shaft and a drive gear that are drivingly engaged with the gear mounted to the input shaft.

12. The hybrid automated manual transmission according to claim 10, further comprising a range gear system drivingly connected to the main shaft.

13. The hybrid automated manual transmission according to claim 10, wherein the motor generator is at a rear of the main shaft.

14. A hybrid automated manual transmission, comprising:
an input shaft configured to be connected to a prime mover by an input clutch;
at least one splitter gear connectable to the input shaft;
a main shaft coaxial with the input shaft;
at least two main shaft gears connectable to the main shaft;
at least one countershaft having at least one first driven gear drivingly engaged with the at least one splitter gear and at least two second driven gears drivingly engaged with the at least two main shaft gears; and
a motor generator drivingly connected to the countershaft through a motor generator clutch.

15. The hybrid automated manual transmission according to claim 14, wherein the motor generator is drivingly connected to the countershaft by an input shaft gear drivingly connected to the input shaft by the motor generator clutch.
